# EUROPÄISCHE PATENTSCHRIFT

(11) **EP 0 356 733 B1**
(45) Veröffentlichungstag und Bekanntmachung des Hinweises auf die Patenterteilung: **31.03.1993**
(21) Anmeldenummer: 89114092.3
(22) Anmeldetag: 31.07.1989
(51) Int. Cl.: B05B 15/12, B05B 15/04

(54) **Vorrichtung zum Abscheiden überschüssigen Sprühmaterials beim Sprühauftragen von Nasslack**
Device for precipitating overspray when spray coating with liquid paint
Dispositif de précipitation de la matière pulvérisée excédentaire lors du revêtement par pulvérisation de peinture liquide

(30) Priorität: 31.08.1988 DE 3829567
(43) Veröffentlichungstag der Anmeldung: 07.03.1990
(73) Patentinhaber: Straub, Hartwig, D-74744 Ahorn (DE)
(72) Erfinder: Straub, Hartwig, D-74744 Ahorn (DE)
(74) Vertreter: Bardehle, Heinz, Dipl.-Ing.

(56) Entgegenhaltungen:
- DE-A- 2 620 673

## Beschreibung

Die Erfindung bezieht sich auf eine Vorrichtung zum Abscheiden überschüssigen Sprühmaterials beim Sprühauftragen von Naßlack gemäß dem Oberbegriff des Patentanspruchs 1.

Derartige Vorrichtungen sind in der DE-A-26 20 673 und der DE-A-36 19 674 beschrieben. Bei den bekannten Vorrichtungen erfolgt das Abscheiden überschüssigen Sprühmaterials zunächst längs der Trennwand durch einen über die Trennwand herabfließenden Wasserfilm, der abzuscheidende Sprühpartikel mitnimmt und einem am unteren Ende der Absaugekabine vorhandenen Wasserbad zuführt. Durch die Öffnungen in der Trennwand strömt also praktisch vollständig von Sprühpartikeln befreite Luft. Es ergibt sich außerdem eine dicht über die Oberfläche des Wasserbades geführte Luftströmung hinter der Trennwand, wodurch eine weitere Abscheidung von Sprühpartikeln bewirkt wird.

Diese Art des Abscheidens überschüssigen Sprühmaterials aus Naßlack, bei dem die Sprühpartikel von Wasser aufgefangen werden, erbringt erhebliche Umweltprobleme, da die Sprühpartikel aus dem Wasser entfernt werden müssen, ehe dieses in kommunale Abwässerkanäle geleitet werden kann.

Der Erfindung liegt die Aufgabe zugrunde, das Abscheiden überschüssigen Sprühmaterials aus Naßlack ohne Zuhilfenahme von Wasser so zu bewerkstelligen, daß die abgeschiedenen Sprühpartikel direkt entsorgt und gegebenenfalls einer Wiederverwendung zugeführt werden können. Erfindungsgemäß geschieht dies durch die im Kennzeichen des Patentanspruchs 1 angegebenen Merkmale.

Aufgrund der sich in Strömungsrichtung verengenden Düsen in der Trennwand ergibt sich hier zunächst eine Luftströmung hoher Geschwindigkeit, aufgrund deren die Sprühpartikel so schnell an den Düsenwänden vorbeigeführt werden, daß diese kaum noch die Tendenz besitzen, sich an der Trennwand bzw. den Düsenwänden festzusetzen. Diese Teile der Vorrichtung bleiben dabei also weitgehend frei von überschüssigem Sprühmaterial. In der Absaugekabine wird dann durch deren Querschnitt und deren glatte Kabinenwände dafür gesorgt, daß sich eine aufwärts gerichtete Luftströmung ergibt, von der die Sprühpartikel für eine so lange Zeit getragen werden, daß sie trocknen und damit staubartigen Charakter annehmen. Dies wird dadurch erreicht, daß die aufwärts gerichtete Lufströmung eine höhere Geschwindigkeit besitzt, als der Sinkgeschwindigkeit der Sprühpartikel in stehender Luft entspricht. Der Trocknungsprozeß der Sprühpartikel erstreckt sich dabei mit Sicherheit auch auf diejenigen Sprühpartikel, die durch den obersten Düsenbereich in die Absaugekabine eintreten, da oberhalb dieses obersten Düsenbereiches für die Sprühpartikel aufgrund entsprechender Länge der Absaugekabine eine Verweilzeit verbleibt, in der die Luftströmung die Sprühpartikel noch mindestens etwa 1 Sekunde trägt, in welcher Zeit die Sprühpartikel sicher abtrocknen können.

Zweckmäßig schaltet man dem Lüfter ein abreinigbares Filter vor, von dem in bekannter Weise die ausgefilterten Sprühpartikel z.B. durch einen gegen den Luftstrom gerichteten Druckluftstoß, als sogenannter Filterkuchen abgeworfen werden. Für das Auffangen der so abgereinigten Sprühpartikel ist in der Absaugekabine eine Auffangvorrichtung vorgesehen. Von dieser aus kann dann das aufgefangene Material entsorgt werden, es kann aber auch dem Sprühprozeß wieder zugeführt werden, wozu die Sprühpartikel natürlich in einem Lösungsmittel entsprechend aufgelöst werden müssen.

Aus konstruktiven Gründen gestaltet man die Düsen zweckmäßig als sich über einen wesentlichen Teil der Trennwand erstrekkende Schlitzdüsen. Diese Schlitzdüsen können sowohl vertikal als auch horizontal oder auch in Kombination angeordnet werden.

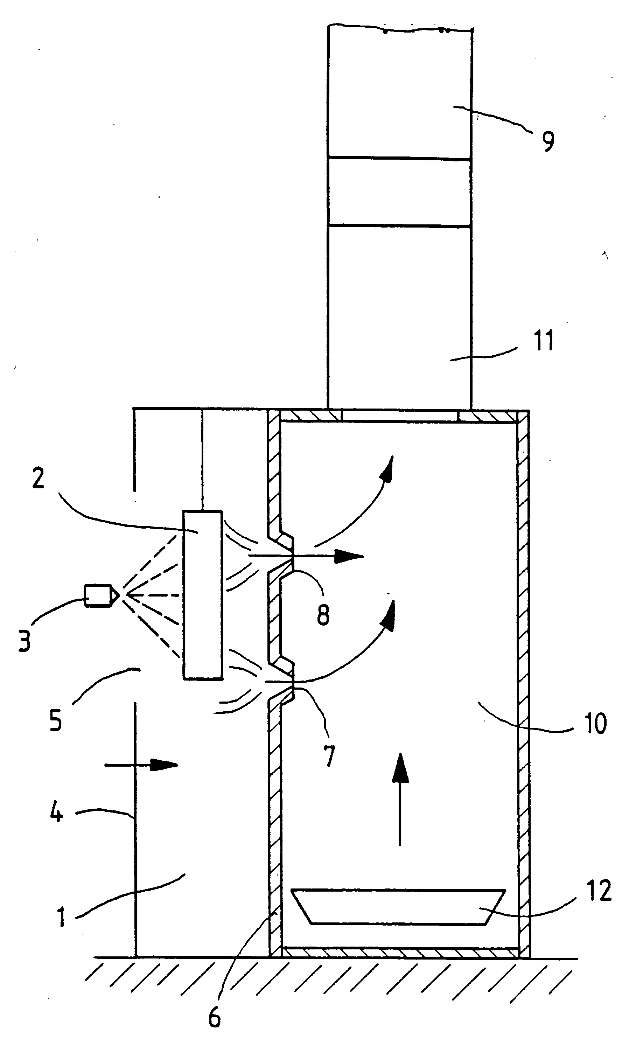

In der Figur ist ein Ausführungsbeispiel im Schnitt dargestellt.

Die Figur zeigt die Spritzkabine 1, in der ein mit Naßlack zu überziehender Gegenstand 2 aufgehängt ist. Auf diesen Gegenstand 2 ist die Spritzpistole 3 gerichtet, bei der es sich um eine von Hand oder automatisch geführte Spritzpistole handeln kann. Für die Zugänglichkeit des Innenraums der Spritzkabine 1 ist in der Vorderwand 4 die Öffnung 5 vorgesehen, durch die der zu besprühende Gegenstand 2 in die Spritzkabine 1 eingeführt wird. Anstelle der Öffnung 5 in der Vorderwand 4 der Spritzkabine kann ein durch Wegfall der Vorderwand 4 geschaffener Durchgang treten. An ihrer rückwärtigen Seite ist die Spritzkabine 1 durch die vertikal verlaufende Trennwand 6 begrenzt, in der hier zwei Düsen 7 und 8 angeordnet sind. Diese Düsen 7 und 8 verengen sich in Richtung der durch die hindurch verlaufenden Pfeile angedeuteten Luftströmung, die durch den Lüfter 9 erzeugt wird. Die beiden Düsen 7 und 8 sind hier als horizontal verlaufende Schlitzdüsen gestaltet.

Im Anschluß an die Trennwand 6 ist die Absaugekabine 10 angeordnet, in der sich aufgrund der Wirkung des Lüfters 9 eine aufwärts gerichtete Luftströmung ergibt. Am oberen Ende der Absaugekabine 10 ist das Filter 11 aufgesetzt, an das sich der Lüfter 9 anschließt. In der Nähe des Bodens der Absaugekabine 10 ist die Auffangvorrichtung 12 für vom Filter 11 abzureinigende ausgefilterte Sprühpartikel vorgesehen.

Dieser Vorrichtung liegt folgendes Funktionsprinzip zugrunde: Der Lüfter 9 saugt durch die Öffnung 5 in die Spritzkabine 1 Luft ein (z.B. mit 0,3 - 0,5 m/sek), die dann durch die Düsen 7 und 8 mit hoher Geschwindigkeit (z.B. 8-12 m/sek.) in die Absaugekabine 10 einströmt. Aufgrund der im Bereich der Düsen 7 und 8 zunehmenden Strömungsgeschwindigkeit der Luft besitzen die von der Luft mitgeführten überschüssigen Sprühpartikel kaum die Tendenz, sich an der Trennwand 6 und den Wandungen der Düsen 7 und 8 festzusetzen, so daß überschüssiges Sprühmaterial praktisch vollständig in die Absaugekabine 10 eingesaugt wird. In der Absaugekabine 10 mit praktisch glatten Kabinenwänden ergibt sich aufgrund deren gegenüber dem Gesamtquerschnitt der Düsen 7 und 8 wesentlich größeren Querschnitts (mindestens das Zehnfache) eine Strömungsgeschwindigkeit, die oberhalb der Sinkgeschwindigkeit der Sprühpartikel in stehener Luft liegt, so daß die in der Absaugekabine befindlichen Sprühpartikel von der Luftströmung relativ langsam nach oben getragen werden. Dabei besitzt die Absaugekabine 10 oberhalb der oberen Düse 8 eine solche Länge, daß die von der Luftströmung mitgeführten Sprühpartikel in diesem Bereich noch mindestens etwa eine Sekunde verweilen, was ausreicht, um auch die durch die Düse 8 eingesogenen Sprühpartikel zu trocknen. Es gelangen somit in das Filter 11 nur trockene Sprühpartikel, die sich in dem Filter praktisch als Staub festsetzen. Als Filter verwendet man zweckmäßig ein bekanntes abreinigbares Filter, das durch einen entgegen der Luftströmung gerichteten Druckluftstoß abgereinigt wird, d.h. von seinem Filtermaterial die angesammelten trockenen Sprühpartikel abwirft, die dann als Filterkuchen von der Auffangvorrichtung 12 aufgefangen werden. Der so gewonnene Filterkuchen kann dann durch Herausfahren der Auffangvorrichtung (12) aus der Absaugekabine 10 irgendeiner Entsorgung zugeführt werden. Er kann aber auch durch Lösen der im Filterkuchen enthaltenen Sprühpartikel in einem Lösungsmittel einer Wiederverwendung zugeführt werden.

## Patentansprüche

1. Vorrichtung zum Abscheiden überschüssigen Sprühmaterials beim Sprühauftragen von Naßlack mit einer Spritzkabine (1) und einer davon durch eine im wesentlichen vertikal verlaufende Trennwand (6) abgetrennten Absaugekabine (10), bei der die Trennwand mit Luftdurchlässen (7,8) für eine Luftströmung versehen ist, die in der Absaugekabine in Aufwärtsrichtung strömt und durch einen am oberen Ende der Absaugekabine angebrachten Lüfter (9) in die Absaugekabine durch die Durchlässe eingesaugt wird, **dadurch gekennzeichnet**, daß die Durchlässe als sich in Strömungsrichtung verengende Düsen (7,8) ausgebildet sind und der Lüfter (9) so eingestellt ist, daß sich in der Absaugekabine (10) eine durch im wesentlichen glatte Kabinenwände aufwärts gerichtete Luftströmung mit höherer Geschwindigkeit als der Sinkgeschwindigkeit der Sprühpartikel in stehender Luft einstellt, wobei die Länge der Absaugekabine oberhalb des obersten Düsenbereiches eine Verweilzeit der Sprühpartikel in der Luftströmung von mindestens etwa einer Sekunde gewährleistet.

2. Vorrichtung nach Anspruch 1, **dadurch gekennzeichnet**, daß dem Lüfter (9) ein abreinigbares Filter (11) vorgeschaltet und in der Absaugekabine (10) eine Auffangvorrichtung (12) für durch das Filter (11) abgeschiedene trockene Sprühpartikel vorgesehen ist, die durch Abreinigen als Filterkuchen abgeworfen werden.

3. Vorrichtung nach Anspruch 1 oder 2, **dadurch gekennzeichnet**, daß die Düsen als sich über einen wesentlichen Teil der Trennwand erstreckende Schlitzdüsen (7, 8) ausgebildet sind.

## Claims

1. Device for separating excess sprayed material when spray coating with liquid paint, comprising a spray booth (1) and an extractor booth (10) separated therefrom by a substantially vertical partition wall (6), wherein the partition wall is provided with air passages (7,8) for an air flow which flows into the extractor booth in the upward direction and is drawn through the passages into the extractor booth by means of a fan (9) arranged at the upper end of the extractor booth, characterised in that the passages are in the form of nozzles (7, 8) tapering in the flow direction and the fan (9) is set in such a manner that the air flow created in the extractor booth (10) is directed upwards by the substantially smooth booth walls and has a higher velocity than the velocity of fall of the sprayed particles in stagnant air, the length of the extractor booth above the uppermost nozzle region ensuring a dwell time of the sprayed particles in the air flow of at least approximately one second.

2. Device according to claim 1, characterised in that a dedustable filter (11) is arranged in front of the fan (9) and a collection device (12) for dry sprayed particles separated by the filter (11) is provided in the extractor booth (10), these particles being discharged in the form of a filter cake by dedusting.

3. Device according to claim 1 or claim 2, characterised in that the nozzles are in the form of slot nozzles (7, 8) extending over a substantial part of the partition wall.

## Revendications

1. Dispositif pour séparer le produit pulvérisé excédentaire lors de l'application de peinture liquide par pulvérisation, avec une cabine de pulvérisation (1) et avec une cabine d'évacuation par aspiration (10) séparée de la cabine de pulvérisation (1) par une cloison de séparation (6) s'étendant sensiblement verticalement, la cloison de séparation étant dotée de passages d'air (7, 8) pour un flux d'air qui s'écoule vers le haut dans la cabine d'évacuation par aspiration et qui est aspiré par les passages dans cette cabine au moyen d'un ventilateur (9) monté à l'extrémité supérieure de cette cabine, **caractérisé** en ce que les passages sont réalisés sous la forme de buses (7, 8) se rétrécissant dans la direction d'écoulement, et le ventilateur (9) est réglé de telle sorte que s'établit, dans la cabine d'évacuation par aspiration (10), un flux d'air qui est dirigé vers le haut par des parois de cabine sensiblement lisses et qui présente une vitesse supérieure à la vitesse de retombée des particules de produit pulvérisé dans de l'ai immobile, la longueur de la cabine d'évacuation par aspiration au-dessus de la buse la plus haute garantissant un temps de séjour d'au moins environ une seconde des particules de produit pulvérisé dans le flux d'air.

2. Dispositif selon la revendication 1, **caractérisé** en ce que le ventilateur (9) est précédé d'un filtre nettoyable (11), et un réceptacle (12) est prévu dans la cabine d'évacuation par aspiration (10) pour les particules sèches de produit pulvérisé séparées par le filtre (11) qui, suite au nettoyage, sont rejetées sous forme de gâteau de filtre.

3. Dispositif selon la revendication 1 ou 2, **caractérisé** en ce que les buses sont réalisées sous la forme de buses à fente (7, 8) s'étendant sur une partie substantielle de la cloison de séparation.
